Europäisches Patentamt

European Patent Office

Office européen des brevets

(11) Veröffentlichungsnummer: **0 236 988 B1**

## (12) EUROPÄISCHE PATENTSCHRIFT

(45) Veröffentlichungstag der Patentschrift: **21.08.91**

(21) Anmeldenummer: **87103262.9**

(22) Anmeldetag: **06.03.87**

(51) Int. Cl.⁵: **A01N 61/00, A01N 63/00, A01G 7/00, C05F 11/10**

(54) **Verfahren zur Förderung von Wachstum und Gesundheit von Nutzpflanzen.**

(30) Priorität: **13.03.86 DE 3608429**

(43) Veröffentlichungstag der Anmeldung:
**16.09.87 Patentblatt 87/38**

(45) Bekanntmachung des Hinweises auf die
Patenterteilung:
**21.08.91 Patentblatt 91/34**

(84) Benannte Vertragsstaaten:
**AT BE CH DE ES FR GB GR IT LI LU NL SE**

(56) Entgegenhaltungen:
**DE-A- 3 433 749**
**FR-A- 2 025 147**

**BIOLOGICAL ABSTRACTS, Band 61, Nr. 7231,
15 Juni 1976, Biological Abstracts Inc., Philadelphia, PA (US); M.ABD-EL-NASSER et al.,
Nr. 69631 "Soil amendments and the rhizosphere effect"**

**BIOLOGICAL ABSTRACTS, Band 73, Nr. 7,
1982, Biological Abstracts Inc, Philadelphia,
PA (US); S.CHANDRA et al., Nr. 49512 "Effect
of organic soil amendments on the rhizosphere microflora of tomato"**

(73) Patentinhaber: **BTC Biotechnik International
GmbH
Kirchwerder Hausdeich 56
W-2050 Hamburg 80(DE)**

(72) Erfinder: **Becker, Klaus
Gojenbergsweg 89
W-2050 Hamburg 80(DE)**

(74) Vertreter: **Kuhnen, Wacker & Partner
Schneggstrasse 3-5 Postfach 1553
W-8050 Freising(DE)**

EP 0 236 988 B1

## Beschreibung

Die Erfindung betrifft ein Verfahren zur Förderung von Wachstum und Gesundheit von Nutzpflanzen.

In der Wurzelzone von Nutzpflanzen bildet sich in Abhängigkeit von der Pflanzenart eine typische mikrobielle Mischbiozönose (eine mikrobielle Mischbiozönose ist die Lebensgemeinschaft verschiedener Mikroorganismen). Es ist bekannt, daß sich Mischbiozönosen in einem sehr langen Zeitraum - in Vergleich zur Generationszeit der einzelnen Arten - zu sehr stabilen (reifen, protektiven) Biozönosen entwickeln, bei denen die Organisationshöhe, die z. B. als Verhältnis von Biomasse zur Produktivität ausgedrückt werden kann, groß ist.

Stabile Biozönosen weisen im allgemeinen eine Vielzahl von Regelungsmechanismen auf, die durch die Änderungen der äußeren Bedingungen abgefangen werden. Artenspektrum und Individuenzahl einer Biozönose pendeln in ihrem Klimaxstadium um einen Optimumpunkt. Erhöht sich beispielsweise das Nahrungsangebot, so vermehren sich vorübergehend fast nur die ubiquitären allochthonen Mikroorganismen, während die hochspezialisierten autochthonen fast konstant bleiben.

Diese autochthonen Mikroorganismen haben sich häufig so spezialisiert, daß sie zum Leben Suppline benötigen. Suppline sind Stoffe, die zum Grundbestand der Zelle gehören und von einzelnen Organismen nicht aus den einfachen Bausteinen synthetisiert werden können. Es handelt sich dabei um Aminosäuren, Purine, Pyrimidine, organische Säuren, Kohlenhydrate, sowie Vitamine. Von ihrer Funktion und Konzentration her unterscheiden sich Suppline deutlich von Nährstoffen. Sie entsprechen den Vitaminen bei der tierischen und menschlichen Ernährung. In mikrobiellen Mischbiozönosen dienen häufig End- oder Zwischemprodukte des Stoffwechsels einer Art der anderen als Suppline, wodurch sich ein Regelmechanismus ergibt (vgl. Schlegel, Allgemeine Mikrobiologie, 5. Auflage 1981, Stuttgart, Verlag Thieme, S. 169). Ein weiterer Regelmechanismus besteht darin, daß die einzelnen Mitglieder einer mikrobiellen Biozönose unterschiedlich empfindlich auf Hemmstoffe reagieren, die entweder von anderen Mitgliedern der mikrobiellen Biozönose oder aber auch von einem höheren Symbiosepartner, z. B. einer Wirtspflanze, stammen.

Die Wechselwirkung, die sich in der Wurzelzone von Nutzpflanzen zwischen mikrobieller Mischbiozönose und dem Symbiosepartner Nutzpflanze ausbildet, kann z. B. darin bestehen, daß die Wurzel der Nutzpflanze Aminosäuren und Hemmstoffe ausscheiden, wodurch bestimmte Mikroorganismen gehemmt oder gefördert werden. Die Pflanze ihrerseits kann mit bestimmten Stoffen, die sie nicht oder in zu geringem Maße selbst synthetisiert, durch die Mikroorganismen als Symbiosepartner versorgt werden.

Im Stand der Technik wurde versucht, bestimmte Bodenbakterien, insbesondere Azotobacter, zuzusetzen oder zu fördern, um den Stickstoffgehalt des Bodens zu verbessern. Hierdurch wird eine instabile mikrobielle Biozönose erzeugt, deren positive Wirkung auf die Nutzpflanzen bei Kulturböden schon nach kurzer Zeit verschwindet.

Der Erfindung liegt die Aufgabe zugrunde, die Pflanzenproduktion über die Steuerung mikrobieller Mischbiozönosen während der gesamten Vegetationsperiode zu fördern. Diese Aufgabe wird erfindungsgemäß bei einem Verfahren der eingangs genannten Art dadurch gelöst, daß man bei stabilen mikrobiellen Mischbiozönosen der Rhizosphäre in eine oder mehreren ökologischen Nischen dieser Biozönose unerwünschte Bakterienarten durch erwünschte Arten dadurch ersetzt, daß man Suppline und/oder Hemmstoffe für einzelne Arten der Mischbiozönose zusetzt.

Die Stabilität der Biozönose verändert sich durch das vorgeschlagene Verfahren nicht oder nur unwesentlich, was ein wichtiger Vorteil des erfindungsgemäßen Verfahrens gegenüber dem Zusatz von Probiotika, künstlich gezüchteten, erwünschten Mikroorganismen (engl.: probiotics), ist.

Als Stoffe, die von der Pflanze selbst nicht oder nicht in genügendem Maße synthetisiert werden können, die in der Rhizosphäre von Nutzpflanzen wirken und durch Mikroorganismen erzeugt werden, sind zahlreiche Vitamine, Aminosäuren, Auxine, Cytokinine, Gibberelline usw. bekannt. Hemmstoffe für bestimmte Mikroorganismen der mikrobiellen Mischbiozönose, die aus Wurzelausscheidungen der Nutzpflanze oder aus mikrobiellen Umsetzungen solcher Ausscheidungen stammen sind z. B. Alkaloide (Berberin, Chelerythrin), Cumarin, eventuell auch Antibiotika. Viele Hemmstoffe sind chemisch noch nicht identifiziert. Besonders wirksam erfolgt die Steuerung durch Zugabe von Supplinen und/oder Hemmstoffen, wenn gleichzeitig oder zeitlich unabhängig von der Zugabe von Supplinen und/oder Hemmstoffen bestimmte Nährstoffe für einzelne oder mehrere Mikroorganismenarten der Mischbiozönose zugesetzt werden.

Häufig können Suppline einer Art in bestimmten Konzentrationen auf andere Arten hemmend wirken. Das gleiche Supplin kann je nach Konzentration auf die gleiche Art sowohl hemmend als auch fördernd wirken.

Als Nutzpflanzen, die über die Steuerung der mikrobiellen Mischbiozönosen ihrer Rhizosphäre ein besseres Wachstum und/oder bessere Gesundheit aufweisen, werden folgende Arten un Artengruppen beispielhaft aufgeführt:

2

| Gräser | Tomate | Kohlarten (Brassica) |
|--------|--------|----------------------|
| Weizen | Tabak | Leguminosen, z. B. |
| Hafer | Kartoffel | Luzerne, Klee, Soja |
| Mais | Zuckerrüben | |
| Flachs | | |

Es sind keine Nutzpflanzen bekannt, die nicht von der Steuerung der mikrobiellen Mischbiozönose profitieren. Daher lassen sich nach dem erfindungsgemäßen Verfahren grundsätzlich alle Nutzpflanzen fördern.

Nährstoffe für die Mikroorganismen der Mischbiozönose der Wurzelzone von Nutzpflanzen, die sich grundsätzlich von Supplinen unterscheiden, sind an sich bekannt (vgl. H. G. Schlegel, Allg. Mikrobiologie, Thieme Stuttgart 1980, 5. Auflage, S. 176 ff). Als Beispiel sind Ammonium-, Nitrat-, Phosphationen und Glucose zu nennen. Kohlenhydrate können sowohl Supplin sein (seltene Kohlenhyrate) als auch den Charakter von Nährstoffen annehmen. Besonders bevorzugt werden beim erfindungsgemäßen Verfahren in Verbindung mit Getreide und Maisarten Algenextrakte und Mycelienrückstände der Antibiotikaproduktion als Dünger zugesetzt. Bei Mais hat sich die Zugabe eines stickstoffarmen organischen Düngers (alkalischer Extrakt aus Laminaria digitata und Ascophyllum nodosum: 70-73 % organische Best.i.T; 15-30 % Alginsäure i.T.; 7-9 % Zellulose i.T.; 7-9 % Protein i.T.; 3-4 % Fett i.T.; 12-14 % Fucoidin i.T.: 3-7 % Laminarin i.T.; 6-12 % Mannit i.T.;) als besonders vorteilhaft in Verbindung mit der Steuerung der Mischbiozönose herausgestellt. Andere stickstoffarme organische Dünger, die eingesetzt werden können sind gesiebte Reifekomposte, Baumrindenpulver (auch kompostierte), desgleichen Pulver oder deren Komposte von Comfrey, Rainfarn, Zwiebel, und Knoblauch sowie Magermilch, Molke, Humus, Humussäuren, Humate.

Die Suppline können den Kulturpflanzen zu verschiedenen Zeiten zugegeben werden. Vorteilhaft ist die Verabreichung der Suppline während der Keimung der Pflanzensamen.

Zweckmäßig ist daher die Zugabe der Suppline zum Pflanzensamen vor der Aussaat z. B. durch Pillieren (Zugabe zur Hüllmasse) wie bei der Zuckerrübe, Kohl, Radies, Poree, Kopfsalat, Selerie, Rote Beete, Zwiebel, Kohlrabe, Gewürzpflanzen, Gras, Blumen, Raps, Rübsen, Brassicaarten. Außer in die Hüllmasse beim Pillieren ist eine Zugabe zur Hüllmasse bei sogenannten künstlichen Samen (nackter Embryo) möglich.

Andere Samen wie Weizen, Gerste, Roggen, Hafer, Mais, Ackerbohne, Erbse, Wicke, Lupine, Soja, Sonnenblume, Reis werden angefeuchtet und in einem Suppline enthaltenden Pulver gewälzt (inkrustiert). Eine andere Möglichkeit der Inkrustierung ist die Zugabe des Pulvers zu einer slurry-Beize.

Kartoffeln und andere Knollenfrüchte werden vor dem Setzen der Saatknollen in eine wässrige Suspension von Supplinen (zusammen mit Klebern und Trägermaterial) getaucht. Andere Möglichkeiten der Anwendung sind die Zugabe zu Torfquelltöpfen und Saatplatten für die Aussaat, das Einmischen in Kultursubstrate auch für solche in paper-pots, die Zugabe als Lösung oder Suspension in das Wasser einer Hydrokultur oder zu inerten Trägerstoffen für die Anzucht (Blähmineralien, Steinwolle).

Außerdem ist die Anwendung als Suspension in der Flüssigsaat (z. B. von Gras; hydraulische Begrünung) möglich ebenso wie die Beimischung zum flüssigen Unterfußdünger bei der Aussaat.

Außer Saatgut können die Suppline auch bei der Stecklings- und Rißlingsvermehrung eingesetzt werden.

Die Supplinmischung wird dem Saatgut je nach Art ihrer Verabreichung zusammen mit Träger- und Hilfsstoffen zugesetzt. Trägerstoffe sind an sich bekannt, z. B. Tone (Bentonit (Montmorillonit), Illit, Kaolinit), thermisch behandelte (geblähte) Mineralien, Gips, Gesteinsmehl, Torf, Sägemehl, Kieselgur, Aluminiumoxid, magnesiumoxid, -carbonat, -silikat, Zinkkarbonat, Calziumoxalat, Calziumkarbonat, Talk, Silicagel, Kohlestaub, Bariumsulfat. Als Hilfsstoffe werden Klebstoffe (Cellulosederivate (Methyl-, Ethyl-, Hydroxiethyl-, Na-Carboxyzellulose), Dextrine, Stärke und Stärkederivate, Alginsäure und derer Salze, Tragant, Gummi arabicum, Gelatine, Wsserglas, Polyvinylpyrrollidon, Lecithin) eingesetzt.

Die Erfindung wird im folgenden anhand eines Ausführungsbeispiels näher erläutert.

Beispiel 1: Maisanbau

Eine Zeacoll genannte Supplinkombination der folgenden Zusammensetzung wurde hergestellt:
500 g Montmorillonit (Träger)

I,25 g Methylzellulose (Kleber)

45 mg LACOBIOS (I)

I00 mg Talkum (Träger)

I 6 mg $MgSO_4 \times 7 H_2O$ p.a. (Dünger)

45 mg BIOSOL® (2)

27 mg Asparagin p.a.

27 mg Threonin p.a.

27 mg Alanin p.a.

27 mg Glutamin p.a.

27 mg Valin p.a.

27 mg Na-Citrat $\times 2 H_2O$ p.a.

27 mg Maleinsäure p.a.

27 mg Gluconsäure p.a.

27 µl Milchsäure (30%ig) z.S.

(I) Produkt der Fa. Probios Biotechnologie GmbH D-8490 Cham aus verarbeitetem Tang von Ascophyllum nodosum und Laminaria digitata (enthält Alginate)

(2) Produkt der Fa. Biochemie Ges.m.b.H. A6250 Kundl, in der BRD vertrieben durch Gebr. Friedrich D-33210 Salzgitter;

getrockneter Filterkuchen aus Mycelien der Antibiotikaproduktion

Die Supplinmischung wurde zusammen mit einer Repellentbeize (Mesurol®) in unterschiedlichen Mengen kurz vor der Aussaat auf das Saatgut aufgebracht. Hierzu wird Zeacoll der slurry-Beize zugesetzt. Pro Hektar werden 22 kg Saatgut eingesetzt.

## Tabelle 1

| Eingesetzte Mengen der Supplinmischung g/ha | Ertrag (Frischgewicht) dt/ha | % Steigerung |
|---|---|---|
| 0 | 385 | 0 |
| 60 | 423 | 10 |
| 120 | 470 | 22 |
| 250 | 477 | 24 |
| 400 | 420 | 9 |

Beispiel 2:

Eine Supplinkombination für Mais enthielt außer einem oder mehreren Träger- und Kleberstoffen für I000 g Pulver die folgenden Verbindungen:

30 mg Glycin p.a.

30 mg Serin p.a.

30 mg Cystin p.a.

30 mg Alanin p.a.

30 mg Guanin p.a.

30 mg Adenin p.a.

30 mg Xylose p.a.

Die Anwendung erfolgte wie in Beispiel I.

Beispiel 3:

Eine Supplinkombination für Mais enthielt auf I000 g Pulver aus einem oder mehreren Träger- und Kleberstoffen die folgenden Verbindungen:

30 mg Glycin p.a.

30 mg Serin p.a.

30 mg Cystin p.a.

30 mg Alanin p.a.

30 mg Guanin p.a.

30 mg Adenin p.a.

30 mg Ribitol p.a.

30 mg Rhamnose p.a.

30 mg Fucose p.a

Die Anwendung erfolgte wie in Beispiel I.

Beispiel 4:

Eine Supplinkombination für Mais enthielt auf I000 g Pulver außer einem oder mehreren Träger- und Kleberstoffen die folgenden Verbindungen:

900 mg Guanin

60 mg Leucin

60 mg Isoleucin

550 mg Valin

2 g Lysin

2 g Xylose

Die Anwendung erfolgte wie in Beispiel I.

Beispiel 5:

Eine Supplinkombination für Mais enthielt auf I000 g Pulver außer einem oder mehreren Träger- und Kleberstoffen die folgenden Verbindungen:

20 mg Uracil

20 mg 5-Hydroxymethyluracil

20 mg Thymin

20 mg Cytosin

20 mg Carbamylphosphat

20 mg Orotat

20 mg Uridylat

20 mg L-Tyrosin

20 mg L-Phenylalanin

20 mg L-Tryptophan

20 mg L-Glutaminsäure

20 mg L-Arginin-HCl

20 mg Asparaginsäure

20 mg Prolin

20 mg Vitamin C

20 mg Biotin

20 mg Tocopherol

20 mg Phyllochinon

20 mg Menadion

20 mg D-Arabinose

20 mg D-Glucose

20 mg D-Glucosamin

20 mg Sorbitol

20 mg Na-(D)-Glutonsäure

20 mg K-(D)-Glutarsäure

20 mg D-Mannose

20 mg D-Galactose

20 mg D-Galacturonsäure

Die Anwendung erfolgte wie in Beispiel I.

Beispiel 6: Weizenanbau

Eine Triticoll genannte Supplinkombination wurde aus den folgenden Bestandteilen hergestellt:
l000 g Montmorillonit (Träger)
5 g Methylzellulose (Kleber)
0,2 mg Isoleucin
0,2 mg Valin
0,l5 mg Tyrosin
0,l5 mg Phenylalanin
0,l5 mg Tryptophan
0,2 mg Brenztraubensäure
0,2 mg Milchsäure
0,4 mg Maleinsäure.

Die Supplinmischung wurde gut gemischt und getrocknet. Winterweizen wurde mit dieser Supplinkombination inkrustiert in einer Menge von 200 mg Supplinpulver/l0 g Saatgut. Hierzu wurde das Saatgut angefeuchtet und in einer Trommel zusammen mit dem triticoll gewälzt.

Im Keimungsversuch im Labor während l0 Tagen ließ sich ein Zuwachs der oberirdischen Substanz gegenüber einem Vergleichsversuch um 5 % feststellen, während die unterirdische Substanz einen Zuwachs zwischen 29 und 38 % gegenüber dem unbehandelten Winterweizen aufwies.

Beispiel 7:

Eine Supplinkombination für Weizen enthielt auf l000 g Pulver außer einem oder mehreren Träger- und Kleberstoffen die folgenden Verbindungen:
0,5 mg Glycin
0,5 mg Serin
0,5 mg Cystin
0,5 mg Alanin
0,5 mg Leucin
0,5 mg Isoleucin
0,5 mg Valin
0,5 mg Threonin
0,5 mg Lysin
0,5 mg Brenztraubensäure
0,5 mg Milchsäure
0,5 mg Oxalsäure
0,5 mg Äpfelsäure
0,5 mg Bernsteinsäure
0,5 mg Malonsäure
0,5 mg Propionsäure
0,5 mg Fumarsäure

Die Anwendung erfolgte wie in Beispiel 6.

Beispiel 8:

Eine Supplinkombination für Weizen enthielt auf l000 g Pulver außer einem oder mehreren Träger- und Kleberstoffen die folgenden Verbindungen:
0,5 mg Glycin
0,5 mg Serin
0,5 mg Cystin
0,5 mg Alanin
0,5 mg Leucin
0,5 mg Isoleucin
0,5 mg Valin
0,5 mg Threonin
0,5 mg Lysin
0,5 mg Brenztraubensäure

EP 0 236 988 B1

0,5 mg Milchsäure
0,5 mg Ketoglutarsäure
0,5 mg Glutarsäure
0,5 mg Nicotinsäure
Die Anwendung erfolgte wie in Beispiel 6.

Beispiel 9:

Eine Supplinkombination für Weizen enthielt auf l000 g Pulver außer einem oder mehreren Träger- und Kleberstoffen die folgenden Verbindungen:
0,5 mg Glycin
0,5 mg Serin
0,5 mg Cystin
0,5 mg Alanin
0,5 mg Leucin
0,5 mg Isoleucin
0,5 mg Valin
0,5 mg Threonin
0,5 mg Lysin
0,5 mg Brenztraubensäure
0,5 mg Milchsäure
0,5 mg Maleinsäure
Die Anwendung erfolgte wie in Beispiel 6.

Beispiel l0:

Eine Supplinkombination für Weizen enthielt auf l000 g Pulver außer einem oder mehreren Träger- und Kleberstoffen die folgenden Verbindungen:
0,5 mg Glycin
0,5 mg Serin
0,5 mg Cystin
0,5 mg Alanin
0,5 mg Leucin
0,5 mg Isoleucin
0,5 mg Valin
0,5 mg Threonin
0,5 mg Lysin
0,5 mg Oxalsäure
0,5 mg Äpfelsäure
0,5 mg Bernsteinsäure
0,5 mg Malonsäure
0,5 mg Propionsäure
0,5 mg Fumarsäure
0,5 mg Ketoglutarsäure
0,5 mg Glutarsäure
0,5 mg Nicotinsäure
Die Anwendung erfolgte wie in Beispiel 6.

Beispiel ll:

Eine Supplinkombination für Weizen enthielt auf l000 g Pulver außer einem oder mehreren Träger- und Kleberstoffen die folgenden Verbindungen:
0,5 mg Glycin
0,5 mg Serin
0,5 mg Cystin
0,5 mg Alanin
0,5 mg Leucin
0,5 mg Isoleucin

7

EP 0 236 988 B1

0,5 mg Valin
0,5 mg Threonin
0,5 mg Lysin
0,5 mg Oxalsäure
0,5 mg Äpfelsäure
0,5 mg Malonsäure
0,5 mg Propionsäure
0,5 mg Fumarsäure
0,5 mg Maleinsäure
Die Anwendung erfolgte wie in Beispiel 6.

Beispiel l2:

Eine Supplinkombination für Weizen enthielt auf l000 g Pulver außer einem oder mehreren Träger- und Kleberstoffen die folgenden Verbindungen:
0,5 mg Glycin
0,5 mg Serin
0,5 mg Cystin
0,5 mg Alanin
0,5 mg Leucin
0,5 mg Isoleucin
0,5 mg Valin
0,5 mg Threonin
0,5 mg Lysin
0,5 mg Ketoglutarsäure
0,5 mg Glutarsäure
0,5 mg Nicotinsäure
0,5 mg Malonsäure
Die Anwendung erfolgte wie in Beispiel 6.

Beispiel l3: Zuckerrübe

Eine Betacoll genannte Supplinkombination der folgenden Zusammensetzung wurde hergestellt:
93,3 g Montmorillonit (0,5 % Methylzellulose)
400 mg Glycin
400 mg Serin
400 mg Cystin
400 mg Alanin
400 mg Glutaminsäure
400 mg Arginin-HCL
400 mg Asparaginsäure
400 mg Prolin

600 mg Alpha-Ketoglutarsäure
600 mg Glutarsäure
600 mg Nicotinsäure
l700 mg Maleinsäure
Diese Grundmischung wird mit l00 mg auf l0 g Pilliermasse aufgegeben. Da 3 g Pilliermasse für l g Zuckerrübensamen ausreicht, bedeutet dies die Zugabe von 6,7 mg Wirksubstanz (Suppline) auf 53 g Zuckerrübensamen. Im Labor werden Keimversuche mit den erfindungsgemäß behandelten Samen durchgeführt. Dabei ergibt sich nach siebentägiger Versuchsdauer ein Zuwachs der oberirdischen Keimlinge zwischen 34 und 94 %, während der Zuwachs der unterirdischen Wurzellänge zwischen l0 und 72 % beträgt.

Beispiel l4:

Eine Supplinkombination für Zuckerrüben enthielt auf l00 g Pulver außer einem oder mehreren Träger- und Kleberstoffen die folgenden Verbindungen:

8

l g Serin
l g Cystin
l g Glutaminsäure
l g Asparaginsäure
l g Prolin
l g Glutarsäure
l g Nicotinsäure
Die Anwendung erfolgte wie in Beispiel l3.

Beispiel l5:

Eine Supplinkombination für Zuckerrüben enthielt auf l00 g Pulver außer einem oder mehreren Träger-
und Kleberstoffen die folgenden Verbindungen:
l g Glycin
l g Serin
l g Cystin
l g Alanin
l g Leucin
l g Isoleucin
l g Valin
l g Threonin
l g Lysin
l g Brenztraubensäure
l g Milchsäure
l g Oxalsäure
l g Bernsteinsäure
l g Malonsäure
l g Propionsäure
l g Fumarsäure
Die Anwendung erfolgte wie in Beispiel l3.

Beispiel l6:

Eine Supplinkombination für Zückerrüben enthielt auf l00 g Pulver außer einem oder mehreren Träger-
und Kleberstoffen die folgenden Verbindungen:
l g Glycin
l g Serin
l g Cystin
l g Alanin
l g Leucin
l g Isoleucin
l g Valin
l g Threonin
l g Lysin
l g Brenztraubensäure
l g Milchsäure
l g Ketoglutarsäure
l g Glutarsäure
l g Nicotinsäure
Die Anwendung erfolgte wie in Beispiel l3.

Beispiel l7:

Eine Supplinkombination für Zückerrüben enthielt auf l00 g Pulver außer einem oder mehreren Träger-
und Kleberstoffen die folgenden Verbindungen:
l g Glycin
l g Serin
l g Cystin

l g Alanin
l g Leucin
l g Isoleucin
l g Valin
l g Threonin
l g Lysin
l g Oxalsäure
l g Äpfelsäure
l g Bernsteinsäure
l g Malonsäure
l g Propionsäure
l g Fumarsäure
l g Ketoglutarsäure
l g Glutarsäure
l g Nicotinsäure
Die Anwendung erfolgte wie in Beispiel l3.

Beispiel l8:

Eine Supplinkombination für Zuckerrüben enthielt auf l00 g Pulver außer einem oder mehreren Träger- und Kleberstoffen die folgenden Verbindungen:
l g Glycin
l g Serin
l g Cystin
l g Alanin
l g Leucin
l g Isoleucin
l g Valin
l g Threonin
l g Lysin
l g Oxalsäure
l g Äpfelsäure
l g Bernsteinsäure
l g Malonsäure
l g Propionsäure
l g Fumarsäure
l g Maleinsäure
Die Anwendung erfolgte wie in Beispiel l3.

Beispiel l9:

Eine Supplinkombination für Zuckerrüben enthielt auf l00 g Pulver außer einem oder mehreren Träger- und Kleberstoffen die folgenden Verbindungen:
l g Glycin
l g Serin
l g Cystin
l g Alanin
l g Leucin
l g Isoleucin
l g Valin
l g Threonin
l g Lysin
l g Ketoglutarsäure
l g Nicotinsäure
l g Maleinsäure
Die Anwendung erfolgte wie in Beispiel l3.

**Patentansprüche**

EP 0 236 988 B1

1. Verfahren zur Förderung von Wachstum und Gesundheit von Nutzpflanzen, dadurch gekennzeichnet, daß man bei stabilen mikrobiellen Mischbiozönosen der Rhizosphäre in einer oder mehreren ökologischen Nischen dieser Bioszönose unerwünschte Bakterienarten durch erwünschte Arten dadurch ersetzt, daß man Suppline für einzelne Arten der Mischbiozönose zusetzt.

2. Verfahren nach Anspruch 1, dadurch gekennzeichnet, daß man gleichzeitig oder zeitlich unabhängig von der Zugabe von Supplinen bestimmte Nährstoffe für einzelne Arten der Mischbiozönose zusetzt.

3. Verfahren nach Anspruch 1 und/oder 2, dadurch gekennzeichnet, daß man eine Aminosäuren und Karbonsäuren als Suppline für Mitglieder der mikrobiellen Mischbiozönose neben an sich bekannten Träger- und Hilfsstoffen enthaltende Mischung zusetzt.

4. Verfahren nach Anspruch 3, dadurch gekennzeichnet, daß man eine Aminosäuren, Karbonsäuren, Purine und Pyrimidine als Suppline für Mitglieder der mikrobiellen Mischbiozönose neben an sich bekannten Träger- und Hilfsstoffen enthaltende Mischung zusetzt.

5. Verfahren nach Anspruch 4, dadurch gekennzeichnet, daß man eine Aminosäuren, Karbonsäuren, Purine, Pyrimidine, Vitamine und Kohlenhydrate als Suppline für Mitglieder der mikrobiellen Mischbiozönose neben an sich bekannten Träger- und Hilfsstoffen enthaltende Mischung zusetzt.

6. Verfahren nach einem der Ansprüche 1 bis 5, dadurch gekennzeichnet, daß man als Nutzpflanzen Mais, Weizen oder Zuckerrüben fördert.

7. Verfahren nach Anspruch 6, dadurch gekennzeichnet, daß man das Maiskorn vor der Aussaat mit der Suppline enthaltenden Mischung überzieht.

8. Verfahren nach Anspruch 6, dadurch gekennzeichnet, daß man beim Mais die Suppline enthaltende Mischung während der Aussaat zusammen mit flüssigem Unterfußdünger einbringt.

9. Verfahren zur Förderung von Wachstum und Gesundheit von Mais nach Anspruch 6, dadurch gekennzeichnet, daß man die Suppline enthaltende Mischung in Kombination mit einem stickstoffarmen Dünger zusetzt.

10. Verfahren nach Anspruch 6, dadurch gekennzeichnet, daß man Zuckerrübensaat mit dem Supplin pilliert.

11. Verfahren nach Anspruch 6, dadurch gekennzeichnet, daß man das Supplingemisch dem Saatgut von Weizen vor der Aussaat in Form eines Pulvers zusetzt.

## Claims

1. A method of promoting the growth and health of useful plants, characterised in that, in the case of stable microbial mixed biocenoses of the rhizosphere, undesirable species of bacteria are replaced by desired species in one or more ecological niches of the biocenosis, by the addition of supplins for individual species of the mixed biocenosis.

2. A method according to claim 1, characterised in that particular nutrients for individual species of the mixed biocenosis are added simultaneously or independently of the time of addition of supplins.

3. A method according to claim 1 and/or 2, characterised by addition of a mixture containing known excipients and adjuvants together with supplins for members of the microbial mixed biocenosis, the supplins being in the form of aminoacids and carboxylic acids.

4. A method according to claim 3, characterised by addition of a mixture containing known adjuvants and excipients together with supplins for members of the microbial mixed biocenosis, the supplins being in the form of aminoacids, carboxylic acids, purines and pyrmidines.

5. A method according to claim 4, characterised by addition of a mixture containing known excipients and adjuvants together with supplins for members of the microbial mixed biocenosis, the supplins being in the form of aminoacids, carboxylic acids, purines, pyrimidines, vitamins and carbohydrates.

6. A method according to claims 1 to 5, characterised in that the useful plants are maize, wheat or sugar-beet.

7. A method according to claim 6, characterised in that the maize seed is coated with the supplin-containing mixture before sowing.

8. A method according to claim 6, characterised in that in the case of maize, the supplin-containing mixture is introduced together with liquid under-foot fertilizer during sowing.

9. A method of promoting the growth and health of maize according to claim 6, characterised in that the supplin-containing mixture is added in combination with a low-nitrogen fertilizer.

10. A method according to claim 6, characterised in that the sugar-beet seed is made into pellets with the supplin.

11. A method according to claim 6, characterised in that the supplin mixture is added in powder form to wheat seed before sowing.

**Revendications**

1. Procédé pour stimuler la croissance et la santé des plantes utiles *caractériséen ce que* dans le cas de biocénoses microbiennes mélangées de la rhizosphère, des espèces de bactéries indésirées sont remplacées par des espèces de bactéries désirées dans une ou plusieurs niches écologiques de ladite biocénose par l'adjonction de facteurs de croissance pour des types spécifiques de ladite biocénose.

2. Procédé selon la revendication 1 *caractériséen ce que* des substances nutritives sont ajoutées pour des types spécifiques de la biocénose mélangée, simultanément avec ou successivement par rapport à l'adjonction de facteurs de croissance.

3. Procédé selon les revendications 1 et/ou 2 *caractérisépar* l'adjonction d'un mélange contenant, outre des substances porteuses et des substances auxiliaires connues en soi, des aminoacides et des acides carboxiliques en tant que facteurs de croissance pour des éléments composant la biocénose microbienne mélangée.

4. Procédé selon la revendication *3 caractérisé par* l'adjonction d'un mélange contenant, outre des substances porteuses et des substances auxiliaires connues en soi, des aminoacides, des acides carboxiliques, des purines et des pyrimidines en tant que facteurs de croissance pour des éléments composant la biocénose microbienne mélangée.

5. Procédé selon la revendication 4 *caractérisépar* l'adjonction d'un mélange contenant, outre des substances porteuses et des substances auxiliaires connues en soi, des aminoacides, des acides carboxiliques, des purines, des pyrimidines, des vitamines et des hydrates de carbone en tant que facteurs de croissance pour des éléments composants la biocénose microbienne mélangée.

6. Procédé selon l'une des revendications 1 à 5 *caractériséen ce que* les plantes utiles dont la croissance est stimulée sont le maïs, le blé ou la betterave à sucre.

7. Procédé selon la revendication 6 *caractériséen ce que* les graines de maïs sont enveloppées par le mélange contenant les facteurs de croissance avant les semailles.

8. Procédé selon la revendication 6 *caractérisépar* l'adjonction simultanée du mélange contenant les facteurs de croissance et d'un engrais liquide sous semence, lors des semailles du maïs.

9. Procédé pour stimuler la croissance et la santé du maïs selon la revendication 6 *caractérisépar*

l'adjonction combinée du mélange contenant les facteurs de croissance et d'un engrais à faible teneur en azote.

10. Procédé selon la revendication 6 *caractériséen ce que* des facteurs de croissance sont ajoutés par pilage à la semence de betterave à sucre.

11. Procédé selon la revendication 6 *caractérisépar* l'adjonction d'un mélange contenant les facteurs de croissance sous forme de poudre, à la semence de blé avant les semailles.